**Europäisches Patentamt**

**European Patent Office**

**Office européen des brevets**

(19)

(11) Veröffentlichungsnummer : **0 175 673**
**B1**

(12) **EUROPÄISCHE PATENTSCHRIFT**

(45) Veröffentlichungstag der Patentschrift :
**19.10.88**

(21) Anmeldenummer : **85890159.8**

(22) Anmeldetag : **19.07.85**

(51) Int. Cl.⁴ : **B 23 Q   7/04**, B 25 J 15/04

(54) **Vorrichtung zum Wechseln der Werkstück-Spanneinrichtung eines Greiferkopfes.**

(30) Priorität : **18.09.84 AT 2959/84**

(43) Veröffentlichungstag der Anmeldung :
**26.03.86 Patentblatt 86/13**

(45) Bekanntmachung des Hinweises auf die Patenterteilung : **19.10.88 Patentblatt 88/42**

(84) Benannte Vertragsstaaten :
**BE CH DE FR GB IT LI NL SE**

(56) Entgegenhaltungen :
**EP-A- 0 104 118**
**DD-A-   214 330**
**FR-A- 2 542 243**

(73) Patentinhaber : **Voest-Alpine Maschinenbau Gesellschaft m.b.H.**
**Lunzerstrasse 64**
**A-4020 Linz (AT)**

(72) Erfinder : **Ganglberger, Klaus, Dipl.-Ing.**
**Werndlweg 11**
**A-4050 Traun (AT)**
Erfinder : **Rennstich, Eugen, Dipl.-Ing.**
**Fliederweg 4**
**D-7129 Güglingen 2 (DE)**

(74) Vertreter : **Hübscher, Gerhard, Dipl.-Ing. et al**
**Patentanwälte Dipl.-Ing. Gerhard Hübscher Dipl.-Ing. Helmut Hübscher Dipl.-Ing. Heiner Hübscher Spittelwiese 7**
**A-4020 Linz (AT)**

## Beschreibung

Die Erfindung bezieht sich auf eine Vorrichtung zum Wechseln einer mit einem Greiferkopf starr verbindbaren Werkstück-Spanneinrichtung, bestehend aus einem an einem verstellbaren Tragarm angebrachten Greiferkopf, der wenigstens einen Anschlußflansch für mindestens eine Spanneinrichtung aufweist, aus einer an diesem Anschlußflansch anschließbaren Spanneinrichtung versehen mit einem gesonderten Gehäuse, das einen mit einem Antrieb im Greiferkopf kuppelbaren Stelltrieb für die Greiferwerkzeuge aufnimmt, und aus einem Magazin mit Halterungen für verschiedene Spanneinrichtungen.

Greiferköpfe zum Be- und Entladen von Werkzeugmaschinen, insbesondere Drehmaschinen, weisen wenigstens eine Spanneinrichtung mit Greifwerkzeugen für die Werkstücke auf, die mittels des durch einen Tragarm verstellbaren Greiferkopfes zwischen wenigstens einem Werkstückspeicher und der Werkzeugmaschine hin- und hergefördert werden können. Da einerseits der Stellweg der Greifwerkzeuge der Spanneinrichtungen begrenzt ist und anderseits unterschiedliche Greifwerkzeuge beispielsweise zum Spannen von Wellen oder Futterteilen benötigt werden, ist es erforderlich, die Greiferköpfe entsprechend umzurüsten. Um die für das Umrüsten notwendige Stillstandszeit der Werkzeugmaschine möglichst klein zu halten, ist es bei Greiferköpfen mit zwei einander diametral gegenüberliegenden Spanneinrichtungen bekannt (DE-A-3 043 687), die beiden Spanneinrichtungen mit dem gemeinsamen Gehäuse gegen entsprechend umgerüstete Spanneinrichtungen auszuwechseln. Zu diesem Zweck ist das Gehäuse mit den beiden Spanneinrichtungen an einem Anschlußflansch des Greiferkopfes austauschbar befestigt, wobei mit der Befestigung des Gehäuses der Spanneinrichtungen am Anschlußflansch der in diesem Gehäuse untergebrachte Stelltrieb für die Greiferwerkzeuge mit einem Antrieb im Greiferkopf selbständig gekuppelt wird. Damit wird zwar der Austausch der Spanneinrichtungen erleichtert, doch bleibt die Notwendigkeit bestehen, die auszutauschenden Spanneinrichtungen von Hand aus vom Greiferkopf zu lösen und die neuen Spanneinrichtungen wiederum von Hand aus am Greiferkopf zu befestigen.

Der Erfindung liegt somit die Aufgabe zugrunde, diese Mängel zu vermeiden und eine Vorrichtung zum maschinellen Wechseln der Werkstück-Spanneinrichtung eines Greiferkopfes zu schaffen. Diese Vorrichtung soll vergleichsweise einfach aufgebaut sein und keine zusätzlichen Antriebe benötigen.

Ausgehend von einer Vorrichtung der eingangs geschilderten Art löst die Erfindung die gestellte Aufgabe dadurch, daß der Anschlußflansch von seiner Anschlußfläche senkrecht abstehende Kupplungsbolzen trägt, für die entsprechende Aufnahmeöffnungen im Gehäuses der Spanneinrichtung vorgesehen sind, daß das Gehäuse der Spanneinrichtung für jeden Kupplungsbolzen eine Verriegelungseinrichtung mit einem gegen die Kraft einer Schließfeder von außen verstellbaren Verschlußstück aufweist und daß das Magazin im Bereich der Halterungen für die Spanneinrichtungen Stell- und Halteanschläge für die Verschlußstücke der Verriegelungseinrichtungen bildet.

Die zum Anschlußflansch senkrechten Kupplungsbolzen, die in entsprechende Aufnahmeöffnungen des Gehäuses der Spanneinrichtung eingreifen, erlauben ein einfaches Aufschieben der jeweiligen Spanneinrichtung auf die Kupplungsbolzen, weil der Tragarm für den Greiferkopf lediglich in Richtung dieser Kupplungsbolzen verstellt werden muß. Die Verriegelungseinrichtung hält dabei die in die Aufnahmeöffnungen eingeführten Kupplungsbolzen fest, so daß für den Kupplungsvorgang lediglich der bereits für die Bewegung des Tragarmes vorgesehene Antrieb benötigt wird. Die Verriegelung selbst wird über die Schließfeder durchgeführt, die das verstellbare Verschlußstück der Verriegelungseinrichtung in die Schließstellung drückt. Voraussetzung für diesen einfachen Kupplungsvorgang ist allerdings, daß beim Ankuppeln einer Spanneinrichtung an den Greiferkopf die Verriegelungseinrichtung sich in einer Entriegelungsstellung befindet. Zu diesem Zweck ist das Magazin mit Stell- und Halteanschlägen für die Verschlußstücke der Verriegelungseinrichtungen versehen. Wird eine Spanneinrichtung in die Halterung des Magazins eingeführt, so drücken die Stell- und Halteanschläge auf die Verschlußstücke der Verriegelungseinrichtung, die zufolge der Relativbewegung zwischen der Spanneinrichtung und den Stell- und Halteanschlägen gegen die Kraft der Schließfeder in die Entriegelungsstellung gedrückt und in dieser Entriegelungsstellung gehalten werden. Die Verriegelungseinrichtungen werden somit beim Einführen der Spanneinrichtungen in die Halterungen des Magazins über die hiefür vorgesehenen Stell- und Halteanschläge automatisch entriegelt, so daß beim Ankuppeln der Spanneinrichtungen an dem Anschlußflansch die Kupplungsbolzen unbehindert in die Aufnahmeöffnungen eingreifen können. Wird die Spanneinrichtung über die Kupplungsbolzen des Anschlußflansches aus der Halterung entnommen, was zumindest eine Teilbewegung des Greiferkopfes quer zu den Kupplungsbolzen erfordert, so werden die Verschlußstücke von den Stell- und Halteanschlägen freigegeben und die Verriegelungseinrichtungen geschlossen, womit der Ankupplungsvorgang beendet ist.

Um die Verschlußstücke der in die Halterungen des Magazins eingesetzten Spanneinrichtungen sicher in der Entriegelungsstellung zu halten, ist es vorteilhaft, wenn die Halterungen des Magazins quer zur Verstellrichtung der Verschlußstücke der aufgenommenen Spanneinrichtungen verlaufende Führungen für die Spanneinrichtungen bilden. Die Spanneinrichtungen sind in diesen Führungen unnachgiebig abgestützt, so daß die Verschlußstücke durch die Stell- und Halteanschläge zwangsläufig in der Entriegelungsstellung gehalten werden, weil ja die Verstellrichtung der Verschlußstücke quer zur Abstützung der Spanneinrichtungen verläuft.

Besonders einfache Konstruktionsverhältnisse werden dabei sichergestellt, wenn die Führungen für die Spanneinrichtungen aus Führungsschlitzen für auf gegenüberliegenden Seitenwänden des Gehäuses der Spanneinrichtungen vorgesehene Führungsstifte bestehen. Diese Führungsstifte greifen beim Einführen der Spanneinrichtungen in die Halterungen des Magazins in die vorgesehenen Führungsschlitze ein, die für das Gehäuse der Spanneinrichtungen eine Zwangsführung darstellen. Damit ist auch die für die Entriegelung der Verschlußstücke erforderliche Relativbewegung zwischen den Stell- und Halteanschlägen und dem Gehäuse der Spanneinrichtungen mit einfachen Mitteln gewährleistet.

Um auch die Stell- und Halteanschläge in Form von Führungsschlitzen ausbilden zu können, können die Verschlußstücke der Verriegelungseinrichtungen über Mitnehmerstifte verstellbar sein, die parallel zu den Führungsstiften des Gehäuses der Spanneinrichtung verlaufen. Diese Mitnehmerstifte erfahren in den die Stell- und Halteanschläge bildenden Schlitzen eine Zwangsführung, wobei die Stellbewegung der Verschlußstücke von der in Richtung der Verstellbewegung der Verschlußstücke gemessenen Abstandsänderung zwischen den Führungsflächen der Führungsschlitze für die Führungsstifte und den Führungsflächen der Schlitze für die Mitnehmerstifte abhängt.

Die Bewegung der Verschlußstücke kann dabei von der Einführbewegung der Spanneinrichtungen in die Halterungen des Magazins weitgehend unabhängig gestaltet werden, wenn die Stell- und Halteanschläge für die Verschlußstücke der Verriegelungseinrichtung eine Anlaufschräge aufweisen, die die Stellbewegung der Verschlußstücke bestimmt.

Obwohl die Verstellrichtung der Verschlußstücke lediglich von den möglichen Bewegungsrichtungen des Greiferkopfes abhängt, weil durch die Bewegung des Greiferkopfes gegenüber dem Magazin die Verstellung der Verschlußstücke erfolgt, ist es besonders vorteilhaft, die Verschlußstücke der Verriegelungseinrichtungen parallel zur Achse der Aufnahmeöffnungen für die Kupplungszapfen verschiebbar zu führen. Die Spanneinrichtungen können nämlich in diesem Fall in der Kupplungsrichtung in die Halterungen des Magazins eingeführt werden.

Um konstruktiv einfache Verriegelungseinrichtungen vorzusehen, die wenig Platz beanspruchen, können die Aufnahmeöffnungen für die Kupplungsbolzen durch eine gehäusefeste Hülse gebildet werden, die Durchbrüche für in eine Ringnut des Kupplungsbolzens eingreifende, Riegelkörper bildende Kugeln aufweist, wobei das Verschlußstück eine auf der Hülse axial verschiebbar gelagerte Buchse umfaßt, die durch die Schließfeder in einer die Durchbrüche für die Kugeln abdeckenden Schließstellung gehalten und gegen die Kraft der Schließfeder von den Durchbrüchen wegschiebbar ist. In der Schließstellung deckt die das Verschlußstück ergebende Buchse die Durchbrüche in der gehäusefesten Hülse ab, so daß die in den Durchbrüchen vorgesehenen Kugeln nicht aus der Ringnut des Kupplungsbolzens austreten können und den Kupplungsbolzen in axialer Richtung festhalten. Wird die Buchse gegen die Kraft der Schließfeder beim Einführen der Spanneinrichtung in die Halterung des Magazins über einen Stell- und Halteanschlag von den Durchbrüchen weggeschoben, so können die Kugeln bei einer axialen Bolzenbewegung radial nach außen durch die Durchbrüche ausweichen. Der Kupplungsbolzen wird daher freigegeben. Bei der gegensinnigen Bewegung der das Verschlußstück bildenden Buchse werden die Kugeln wieder durch die Durchbrüche gegen die Ringnut des Bolzens gedrückt und in der Eingriffsstellung festgehalten.

Wenn die die Riegelkörper bildenden Kugeln nicht in einem Käfig od. dgl. gefangen sind, besteht die Gefahr, daß beim Lösen des Kupplungsbolzens die Kugeln aus den Durchbrüchen in die gehäusefeste Hülse fallen. Dies muß verhindert werden. Zu diesem Zweck kann in der gehäusefesten Hülse ein Stempel verschiebbar gelagert sein, der gegen die Kraft einer Feder aus einer die Durchbrüche für die Kugeln abdeckenden Anschlagstellung durch den Kupplungsbolzen in die Aufnahmeöffnung einschiebbar ist. In seiner Anschlagstellung deckt der Stempel die Durchbrüche in der gehäusefesten Hülse von innen her ab, so daß die Kugeln nicht in die Hülse fallen können. Durch den in die Aufnahmeöffnung eingreifenden Kupplungsbolzen wird der Stempel gegen die Federkraft in die Aufnahmeöffnung hineingedrückt, wobei die Durchbrüche in der Hülse zunächst durch den Kupplungsbolzen abgedeckt bleiben, bis der Kupplungsbolzen zur Gänze in die Aufnahmeöffnung eingeführt ist und die Durchbrüche im Bereich der Ringnut liegen. Beim Entkuppeln wird der Stempel an den Kupplungsbolzen angedrückt bis die Anschlagstellung erreicht ist, in der die Durchbrüche wiederum abgedeckt sind.

In der Zeichnung ist der Erfindungsgegenstand beispielsweise dargestellt. Es zeigen

Fig. 1 eine erfindungsgemäße Wechselvorrichtung für eine Drehmaschine in einer vereinfachten Stirnansicht,

Fig. 2 eine an den Anschlußflansch eines Greiferkopfes angekuppelte Spanneinrichtung in einer teilweise aufgerissenen Seitenansicht in einem größeren Maßstab,

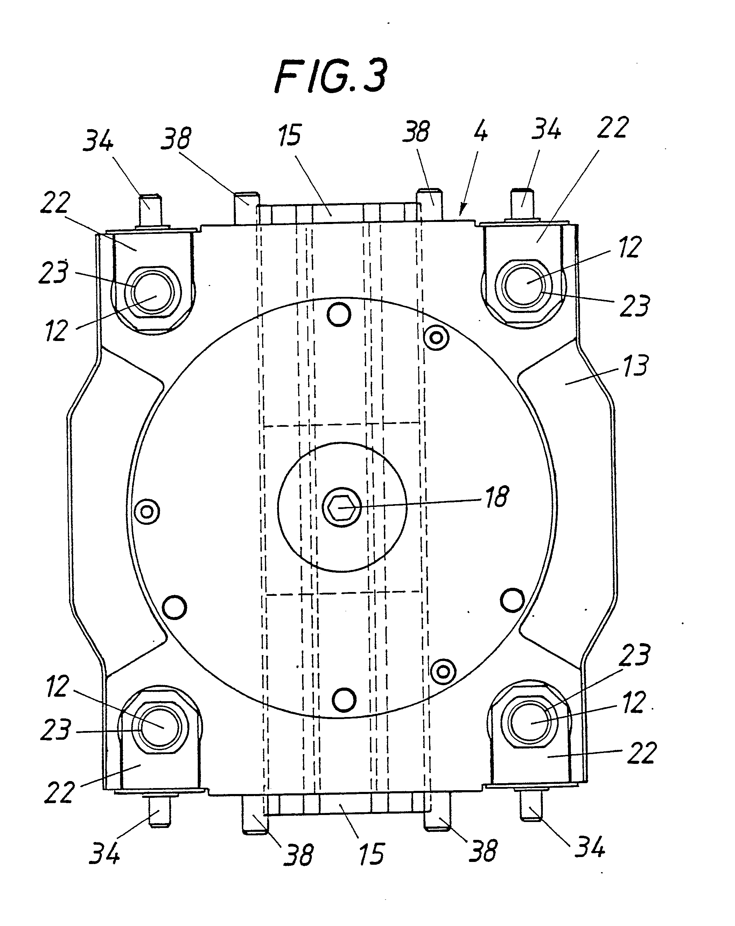

Fig. 3 diese Spanneinrichtung in einer Draufsicht auf die Kuppelseite,

Fig. 4 eine Verriegelungseinrichtung für den Kupplungsbolzen des Anschlußflansches im Schnitt in einem größeren Maßstab,

Fig. 5 diese Verriegelungsvorrichtung in einer Seitenansicht,

Fig. 6 das Magazin für die Spanneinrichtungen ausschnittsweise in einer Vorderansicht,

Fig. 7 einen Schnitt nach der Linie VII-VII der Fig. 6 und

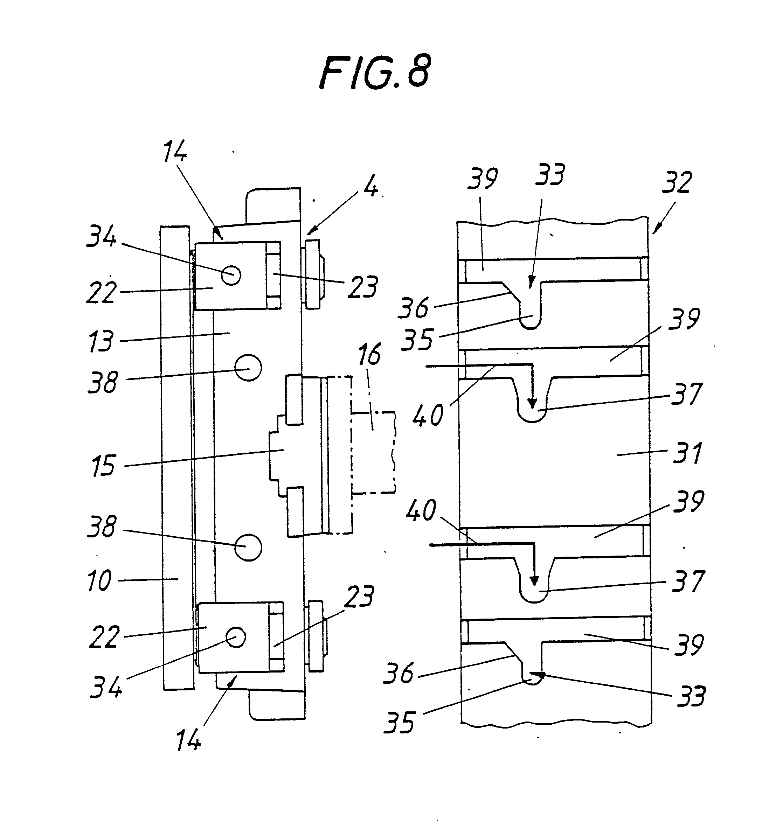

Fig. 8 eine Spanneinrichtung unmittelbar vor dem Einführen in das Magazin in einer schematischen Seitenansicht in einem größeren Maßstab.

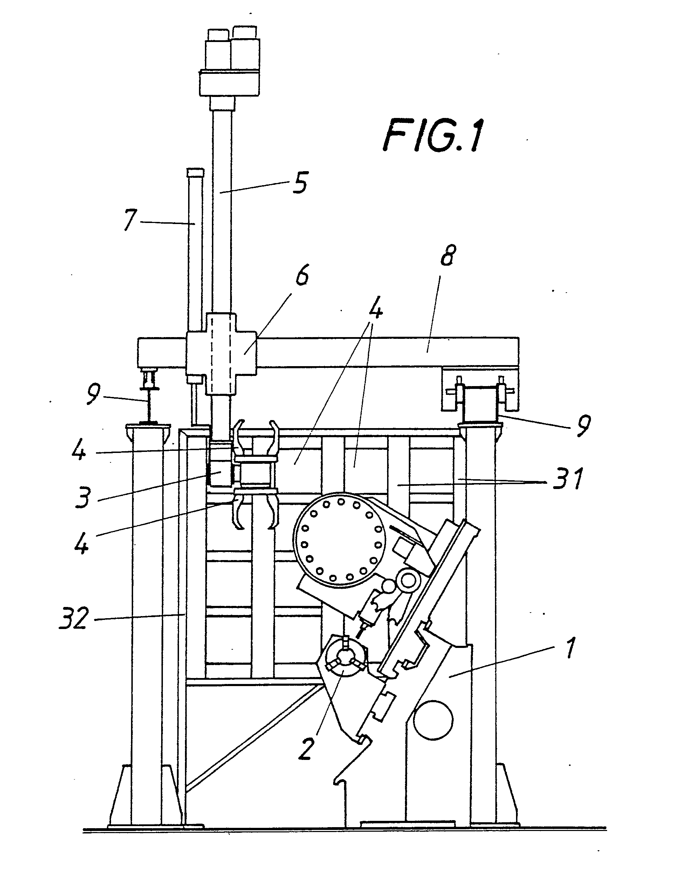

Gemäß Fig. 1 soll eine Drehmaschine 1 be- und entladen werden, deren Spannfutter mit 2 bezeichnet ist. Zu diesem Zweck ist ein Greiferkopf 3 mit zwei Werkstück-Spanneinrichtungen 4 vorgesehen, der an einem Tragarm 5 angeordnet ist. Dieser Tragarm 5 ist in einem Querschlitten 6 vertikal verschiebbar geführt und kann mit Hilfe eines Zylinders 7 gehoben und gesenkt werden. Der Querschlitten 6 lagert auf einem Längsschlitten 8, der auf Führungsbahnen 9 in Richtung der Hauptachse der Drehmaschine 1 verfahren werden kann. Der Greiferkopf 3 kann somit in drei zueinander senkrechten Achsen bewegt werden. Zusätzlich sind die Spanneinrichtungen 4 um eine gemeinsame, parallel zur Verstellrichtung des Querschlittens 6 verlaufende Drehachse um 180° verschwenkbar, um mit einer der beiden Spanneinrichtungen 4 das bereits fertig bearbeitete Werkstück aus dem Spannfutter 2 der Drehmaschine 1 entnehmen und dann ein mit Hilfe der anderen Spanneinrichtung angefördertes, zu bearbeitendes Werkstück in das Spannfutter 2 einsetzen zu können, ohne den Greiferkopf 3 über den Tragarm 5 vertikal verstellen zu müssen.

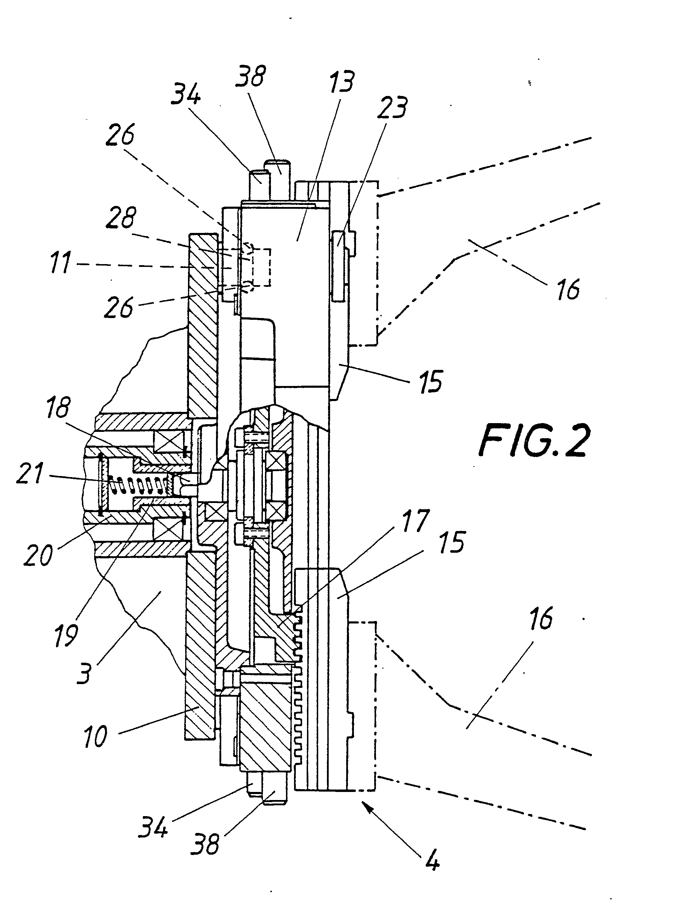

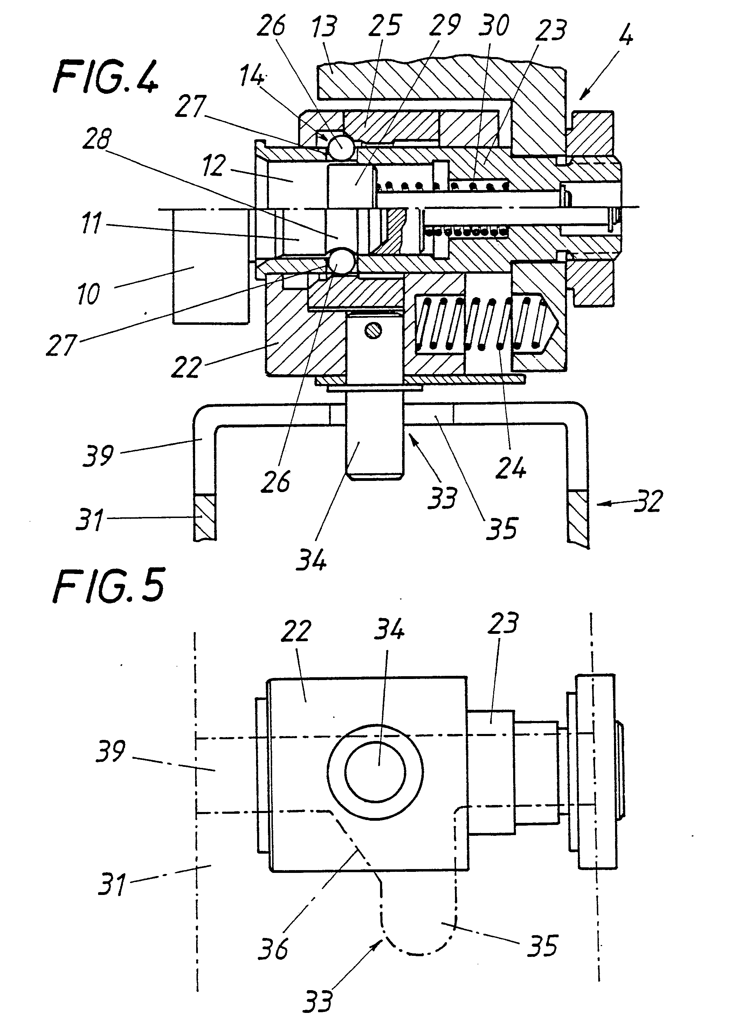

Damit Werkstücke stark unterschiedlicher Größe bzw. unterschiedlicher Form mit Hilfe der Spanneinrichtungen erfaßt werden können, müssen die Spanneinrichtungen an die Werkstückgeometrie angepaßt sein. Der Greiferkopf 3 muß folglich für die Bearbeitung solcher unterschiedlicher Werkstücke umgerüstet werden, indem die Spanneinrichtungen 4 ausgetauscht werden. Um dieses Wechseln der Spanneinrichtungen 4 maschinell durchführen zu können, weist der Greiferkopf 3 gemäß Fig. 2 einen Anschlußflansch 10 auf, der senkrecht abstehende Kupplungsbolzen 11 trägt. Diese Kupplungsbolzen 11 greifen in Aufnahmeöffnungen 12' des Gehäuses 13 der Spanneinrichtung 4 ein und werden in den Aufnahmeöffnungen 12 durch eine lösbare Verriegelungseinrichtung 14 festgehalten (Fig. 4). Beim Anschluß der Spanneinrichtungen 4 an den Greiferkopf 3 muß selbstverständlich auch der Stelltrieb der Spanneinrichtungen 4 mit dem Antrieb des Greiferkopfes 3 gekuppelt werden. Der Stelltrieb für die radial im Gehäuse 13 verschiebbar gelagerten Spannbacken 15, die die Greiferwerkzeuge 16 austauschbar tragen, besteht gemäß dem Ausführungsbeispiel aus einer im Gehäuse 13 drehbar gelagerten Planspiralscheibe 17, die in einen entsprechenden Planspiralabschnitt der Spannbacken 15 eingreift und über eine Anschlußwelle 18 angetrieben werden kann. Diese Anschlußwelle 18 ist als Mehrkantwelle ausgebildet und bildet mit einer gegengleich geformten Steckhülse 19 eine Steckkupplung. Die Steckhülse 19 ist drehfest, aber axial verschiebbar in eine hohle Abtriebswelle 20 des Greiferkopfes 3 eingesetzt und durch eine Feder 21 beaufschlagt.

Stimmt die Drehstellung der Anschlußwelle 18 beim Ankuppeln der Spanneinrichtung 4 an den Anschlußflansch 10 nicht mit der Drehstellung der Steckhülse 19 überein, so wird die Steckhülse 19 gegen die Kraft der Feder 21 in die Abtriebswelle 20 des Greiferkopfes 3 eingeschoben, ohne das Einführen der Kupplungsbolzen 11 in die Aufnahmeöffnungen 12 und damit den Anschlußvorgang zu behindern. Bei einem Antrieb der Abtriebswelle 20 wird die Steckhülse 19 durch die Feder 21 auf die Anschlußwelle 18 aufgeschoben und eine formschlüssige Antriebsverbindung hergestellt, sobald einander deckende Drehlagen erreicht sind. Die Spanneinrichtung 4 kann dann über die Abtriebswelle 20 nach beiden Richtungen verstellt werden.

Die Verriegelungseinrichtung 14 für die in die Aufnahmeöffnungen 12 eingreifenden Kupplungsbolzen 11 besteht gemäß den Fig. 4 und 5 aus einem Verschlußstück 22, das axial verschiebbar auf einer gehäusefesten Hülse 23 gelagert ist und im Schließsinn der Verriegelungseinrichtung durch eine Schließfeder 24 beaufschlagt wird. Die Verriegelungseinrichtung 14 umfaßt eine Buchse 25, die mit Riegelkörper bildenden Kugeln 26 zusammenwirkt. Diese Kugeln 26 sind in Durchbrüche 27 der die Aufnahmeöffnungen 12 ergebenden Hülse 23 eingesetzt und greifen in der Verriegelungsstellung in eine Ringnut 28 der Kupplungsbolzen 11 ein. In dieser Verriegelungsstellung deckt die Buchse 25 die Durchbrüche 27 in der Hülse 23 ab, wie dies in dem unteren Teil der Fig. 4 dargestellt ist. Zum Entriegeln muß das Verschlußstück 22 gegen die Kraft der Schließfeder 24 auf der Hülse 23 verschoben werden, um gemäß der Darstellung im oberen Teil der Fig. 4 die Kugeln 26 freizugeben, die demnach beim Herausziehen des Kupplungsbolzens 11 aus der Aufnahmeöffnung 12 radial nach außen ausweichen können. Damit die Kugeln 26 nicht aus den Durchbrüchen 27 in das Innere der Hülse 23 gelangen können, ist innerhalb der Hülse 23 ein Stempel 29 verschiebbar geführt, der durch eine Feder 30 in einer Anschlagstellung gehalten wird, in der er die Durchbrüche 27 abdeckt. Dieser Stempel 29 wird beim Einführen des Kupplungsbolzens 11 in die Aufnahmeöffnung 12 gegen die Kraft der Feder 30 zurückgeschoben, wobei die Kugeln 26 in den Bereich der Ringnut 28 gelangen, wie dies dem unteren Teil der Fig. 4 entnommen werden kann. Wird in dieser Kupplungsstellung das Verschlußstück 22 freigegeben, so drückt die Schließfeder 24 die Buchse 25 in die die Durchbrüche 27 abdeckende Schließstellung, in der der Kupplungsbolzen 11 in der Aufnahmeöffnung 12 verriegelt ist.

Damit das geschilderte An- und Abkuppeln der Spanneinrichtungen 4 in einfacher Weise durchgeführt werden kann, werden die zum Auswechseln vorgesehenen Spanneinrichtungen 4 in entsprechenden Halterungen 31 eines Magazins 32 aufgenommen. Dieses Magazin 32 bildet im Bereich der Halterungen 31 Stell- und Halteanschläge 33 für die Verschlußstücke 22, die beim Einführen der jeweiligen Spanneinrichtung 4 in die Halterungen von den Stell- und Halteanschlägen 33 verstellt werden, und zwar über in die Verschlußstücke 22 eingesetzte Mitnehmerstifte 34. Die Anordnung ist dabei so getroffen, daß die Stell- und Halteanschläge durch Führungsschlitze 35 gebildet werden, die eine Anlaufschräge 36 für die Mitnehmerstifte 34 aufweisen. Die Halterungen selbst sind mit Führungsschlitzen 37 für Führungsstifte 38 versehen, die parallel zu den Mitnehmerstiften 34 verlaufen und seitlich am Gehäuse 13 der Spanneinrichtungen 4 angeordnet sind. Die Führungsschlitze 37 bilden eine quer zur Verstellrichtung der Verschlußstücke 22 der aufgenommenen Spanneinrichtungen verlaufende Führung, so daß beim Einführen der Spanneinrichtungen 4 in diese Führungsschlitze 37 die Mitnehmerstifte 34 der Verschlußstücke 22 nicht nur entlang der Anlaufschräge 36 gegen die Kraft der Schließfeder 24 im Entriegelungssinn verstellt, sondern auch in der Entriegelungsstellung gehalten werden. Die Anlaufschräge 36 bildet somit den Stellteil und der daran anschließende parallele Abschnitt des Führungsschlitzes 35 den Halteteil der Stell- und Halteanschläge 33. Da die Stellbewegung der Verschlußstücke 22 in Kupplungsrichtung verläuft, muß die Spanneinrichtung mit Hilfe des Greiferkopfes 3 quer zur Kupplungsrichtung in die Führungsschlitze 36, 37 eingeführt werden. Die Führungsschlitze 36, 37 sind daher über Einführschlitze 39 in den Halterungen 31 zugänglich. Diese Einführschlitze sind nach beiden Seiten hin offen, so daß die Spanneinrichtungen auch von der dem Greiferkopf abgewendeten Seite entnommen und eingesetzt werden können.

Da die Spanneinrichtungen 4 in den quer zur Kupplungsrichtung verlaufenden Führungsschlitzen 37 im Magazin 32 gehalten sind, was eine Einführung der Spanneinrichtungen in die Halterungen 31 in zwei zueinander senkrechten Richtungen verlangt, wie dies durch die Pfeile 40 angedeutet ist, bietet das Herausziehen der Kupplungsbolzen aus den Aufnahmeöffnungen bzw. das Einführen der Kupplungsbolzen in die Aufnahmeöffnungen der Spanneinrichtungen keine Schwierigkeiten, weil die Spanneinrichtungen in dieser Richtung entsprechend abgestützt sind. Die Bewegung des Greiferkopfes 3 in zwei zueinander senkrechten Richtungen entsprechend dem Verlauf der Einführschlitze 39 und der davon ausgehenden Führungsschlitze 37 kann bei der in drei Achsen verstellbaren Greiferlagerung problemlos durchgeführt werden.

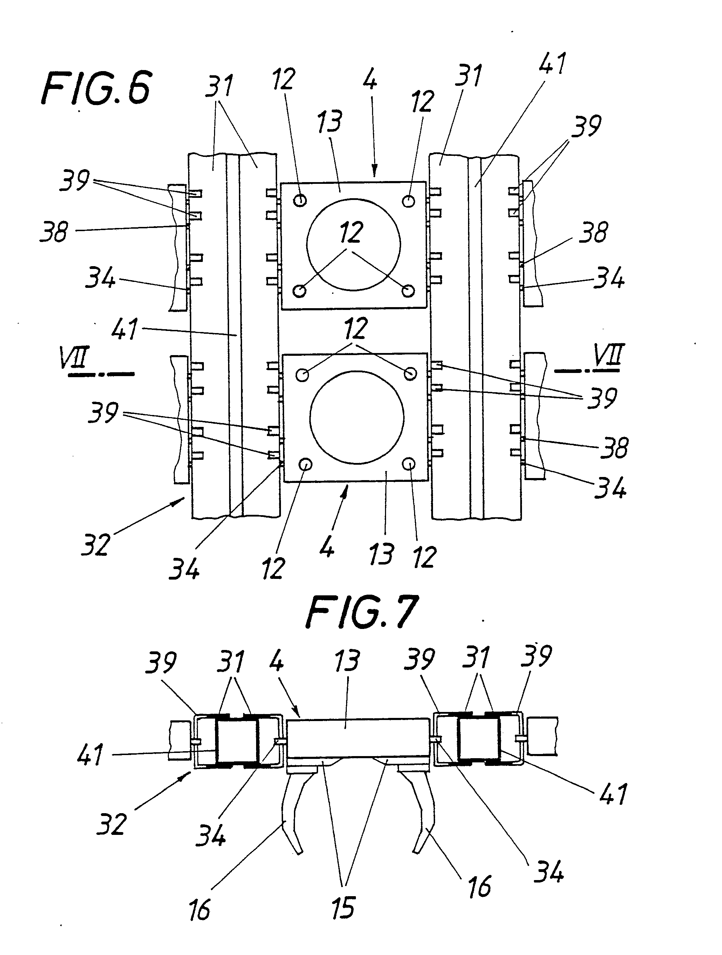

Besonders einfache Konstruktionsverhältnisse ergeben sich für das Magazin 32, wenn die Halterungen 31 aus im Querschnitt U-förmigen Profilen bestehen, die an gegenüberliegenden Seiten von Stehern 41 befestigt sind und die Führungsschlitze für die Spanneinrichtungen bilden, wie dies den Fig. 6 und 7 entnommen werden kann.

Um das ordnungsgemäße Einführen der Führungsstifte 38 und der Mitnehmerstifte 34 in die Einführschlitze 39 sicherzustellen, können die Führungsstifte 38 gegenüber den Mitnehmerstiften 34 einen unterschiedlichen Durchmesser aufweisen, wobei die Einführschlitze 39 diesen Durchmessern entsprechende Öffnungsweiten besitzen.

Da der Greiferkopf mit einer Anschlußplatte 10 und Kupplungsbolzen 11 versehen ist, können an dem Greiferkopf nicht nur Spanneinrichtungen 4, sondern auch andere Werzeuge oder Werkzeugteile angeschlossen werden, die beispielsweise zum Umrüsten der Drehmaschine benötigt werden. Zu diesem Zweck brauchen diese Umrüstteile lediglich mit entsprechenden Verriegelungseinrichtungen 14 versehen zu werden. Mit Hilfe eines solchen Greiferkopfes kann somit z. B. ein Spannfutterwechsel maschinell durchgeführt werden. Bilden die beiden Spanneinrichtungen 4 eine Baueinheit, so kann auch diese Baueinheit an Stelle der beiden Spanneinrichtungen ausgewechselt werden.

**Patentansprüche**

1. Vorrichtung zum Wechseln einer mit einem Greiferkopf (3) starr verbindbaren Werkstück-Spanneinrichtung (4), bestehend aus einem an einem verstellbaren Tragarm (5) angebrachten Greiferkopf (3), der wenigstens einen Anschlußflansch (10) für mindestens eine Spanneinrichtung (4) aufweist, aus einer an diesem Anschlußflansch (10) anschließbaren Spanneinrichtung (4) versehen mit einem gesonderten Gehäuse (13), das einen mit einem Antrieb im Greiferkopf (3) kuppelbaren Stelltrieb für die Greiferwerkzeuge (16) aufnimmt, und aus einem Magazin (32) mit Halterungen (31) für verschiedene Spanneinrichtungen (4), dadurch gekennzeichnet, daß der Anschlußflansch (10) von seiner Anschlußfläche senkrecht abstehende Kupplungsbolzen (11) trägt, für die entsprechende Aufnahmeöffnungen (12) im Gehäuse (13) der Spanneinrichtung (4) vorgesehen sind, daß das Gehäuse (13) der Spanneinrichtung (4) für jeden Kupplungsbolzen (11) eine Verriegelungseinrichtung (14) mit einem gegen die Kraft einer Schließfeder (24) von außen verstellbaren Verschlußstück (22) aufweist und daß das Magazin (32) im Bereich der Halterungen (31) für die Spanneinrichtungen (4) Stell- und Halteanschläge (33) für die Verschlußstücke (22) der Verriegelungseinrichtungen (14) bildet.

2. Vorrichtung nach Anspruch 1, dadurch gekennzeichnet, daß die Halterungen (31) des Magazins (32) quer zur Verstellrichtung der Verschlußstücke (22) der aufgenommenen Spanneinrichtungen (4) Führungen für die Spanneinrichtungen (4) bilden.

3. Vorrichtung nach Anspruch 2, dadurch gekennzeichnet, daß die Führungen für die Spanneinrichtungen (4) aus Führungsschlitzen (37) für auf gegenüberliegenden Seitenwänden des Gehäuses (13) der Spanneinrichtungen (4) vorgesehene Führungsstifte (38) bestehen.

4. Vorrichtung nach Anspruch 3, dadurch gekennzeichnet, daß die Verschlußstücke (22) der Verriegelungseinrichtungen (14) über Mitnehmerstifte (34) verstellbar sind, die parallel zu den Führungsstiften (38) des Gehäuses (13) der Spanneinrichtung (4) verlaufen.

5. Vorrichtung nach einem der Ansprüche 1 bis 4, dadurch gekennzeichnet, daß die Stell- und Halteanschläge (33) für die Verschlußstücke (22) der Verriegelungseinrichtungen (14) eine Anlaufschräge (36) aufweisen.

6. Vorrichtung nach einem der Ansprüche 1 bis 5, dadurch gekennzeichnet, daß die Verschlußstücke (22) der Verriegelungseinrichtungen (14) parallel zur Achse der Aufnahmeöffnungen (12) für die Kupplungsbolzen (71) verschiebbar geführt sind.

7. Vorrichtung nach den Ansprüchen 1 und 6, dadurch gekennzeichnet, daß die Aufnahmeöffnungen (12) für die Kupplungsbolzen (11) durch eine gehäusefeste Hülse (23) gebildet sind, die Durchbrüche (27) für in eine Ringnut (28) des Kupplungsbolzens (11) eingreifende, Riegelkörper bildende Kugeln (26) aufweist, und daß das Verschlußstück (22) eine auf der Hülse (23) axial verschiebbar gelagerte Buchse (25) umfaßt, die durch die Schließfeder (24) in einer die Durchbrüche (27) für die Kugeln (26) abdeckenden Schließstellung gehalten und gegen die Kraft der Schließfeder (24) von den Durchbrüchen (27) wegschiebbar ist.

8. Vorrichtung nach Anspruch 7, dadurch gekennzeichnet, daß in der gehäusefesten Hülse (23) ein Stempel (29) verschiebbar gelagert ist, der gegen die Kraft einer Feder (30) aus einer die Durchbrüche (27) für die Kugeln (26) abdeckenden Anschlagstellung durch den Kupplungsbolzen (11) in die Aufnahmeöffnung (12) einschiebbar ist.

**Claims**

1. An apparatus for replacing a workpiece-chucking device (4) which is adapted to be rigidly connected to a gripper head (3), which apparatus consists of a gripper head (3) which is mounted on an adjustable carrying arm (5) and comprises at least one connecting flange (10) for at least one chucking device (4), and of a chucking device (4) which is adapted to be connected to that connecting flange (10) and comprises a separate housing (13) which contains an actuator for the gripper tools (16), which actuator is adapted to be coupled to a drive in the gripper head (3), and of a magazine (32) provided with holders (31) for different chucking devices (4), characterized in that the connecting flange (10) carries coupling pins (11), which protrude at right angles from the connecting surface of the flange, openings (12) for receiving said pins are provided in the housing (13) of the chucking device (4), the housing (13) of the chucking device (4) comprises for each coupling pin (11) a locking device (14) having a closing member (22), which is adjustable from the outside against the force of a closing spring (24), and the magazine (32) comprises adjusting and retaining stops (33) for the closing members (22) of the locking devices (14), which stops are disposed adjacent to the holders (31) for the chucking devices (4).

2. An apparatus according to claim 1, characterized in that the holders (31) of the magazine (32) constitute guides for the chucking devices (4), which guides extend transversely to the direction in which the closing members (22) of the chucking devices (4), which have been received, are adjustable.

3. An apparatus according to claim 2, characterized in that the guides for the chucking devices (4) consist of guide slots (37) for guide pins (38), which are provided on opposite side walls of the housing (13) of the chucking devices (4).

4. An apparatus according to claim 3, characterized in that the closing members (22) of the locking devices (14) are adjustable by follower pins (34), which are parallel to the guide pins (38) of the housing (13) of the chucking device (4).

5. An apparatus according to any of claims 1 to 4, characterized in that the adjusting and retaining stops (33) for the closing members (22) of the locking devices (14) have a run-up ramp (36).

6. An apparatus according to any of claims 1 to 5, characterized in that the closing members (22) of the locking devices (14) are guided for a displacement in a direction which is parallel to the axis of the openings (12) for receiving the coupling pins (11).

7. An apparatus according to claims 1 and 6, characterized in that the openings (12) for receiving the coupling pins (11) are formed by a sleeve (23), which is fixed to the housing and has apertures (27) for balls (26), which constitute locking members and extend into an annular groove (28) of the coupling pin (11), the closing member (22) comprises a bushing (25), which is axially slidably mounted on the sleeve (23) and is held by the closing spring (24) in a closing position in which the bushing covers the apertures (27) for the balls (26), and the bushing is adapted to be displaced from the apertures (27) against the force of the closing spring (24).

8. An apparatus according to claim 7, characterized in that a punch (29) is displaceably mounted in the sleeve (23) which is fixed to the housing, and said punch is adapted to be displaced by the coupling pin (11) into the receiving opening (12) against the force of a spring (30) from a stop position, in which the punch covers the apertures (27) for the balls (26).

**Revendications**

1. Dispositif pour changer un dispositif (4) de serrage de pièce d'usinage qui peut être relié de manière rigide à une tête preneuse (3), se composant d'une tête preneuse (3) montée sur un bras (5) de support positionnable et équipée d'au moins une bride de raccordement (10) pour au minimum un dispositif (4) de serrage, d'un dispositif (4) de serrage qui peut être raccordé à ladite bride de raccordement (10) et est muni d'un boîtier (13) séparé abritant un mécanisme d'actionnement pour les outils preneurs (16) qui peut être accouplé à un entraînement dans la tête preneuse (3), et d'un magasin (32) comportant des supports (31) pour différents dispositifs (4) de serrage, caractérisé par le fait que la bride de raccordement (10) porte des broches d'accouplement (11) qui font saillie perpendiculairement à sa surface de raccordement et pour lesquelles des ouvertures de réception (12) correspondantes sont pratiquées dans le boîtier (13) du dispositif (4) de serrage, que le boîtier (13) du dispositif (4) de serrage présente, pour chacune des broches d'accouplement (11), un dispositif (14) de verrouillage avec une pièce de verrou (22) pouvant être déplacée de l'extérieur en surmontant la force d'un ressort (24) de fermeture, et que le magasin (32) forme, dans la zone des supports (31) destinés aux dispositifs (4) de serrage, des butées de positionnement et de retenue (33) pour les pièces de verrou (22) des dispositifs (14) de verrouillage.

2. Dispositif selon la revendication 1, caractérisé par le fait que les supports (31) du magasin (32) forment des guidages pour les dispositifs (4) de serrage, dans le sens transversal à la direction du déplacement des pièces de verrou (22) des dispositifs (4) de serrage contenus.

3. Dispositif selon la revendication 2, caractérisé par le fait que les guidages pour les dispositifs (4) de serrage se composent de fentes de guidage (37) destinées aux tétons de guidage (38) prévus sur des parois latérales se faisant face dans le boîtier (13) du dispositif (4) de serrage.

4. Dispositif selon la revendication 3, caractérisé par le fait que les pièces de verrou (22) des dispositifs (14) de verrouillage peuvent être déplacées par l'intermédiaire de tiges d'entraînement (34) qui s'étendent parallèlement aux tétons de guidage (38) du boîtier (13) du dispositif (4) de serrage.

5. Dispositif selon l'une des revendications 1 à 4, caractérisé par le fait que les butées (33) de positionnement et de retenue pour les pièces de verrou (22) des dispositifs (14) de verrouillage présentent un pan oblique d'attaque (36).

6. Dispositif selon l'une des revendications 1 à 5, caractérisé par le fait que les pièces de verrou (22) des dispositifs (14) de verrouillage sont mobiles et guidées dans le sens parallèle à l'axe des ouvertures de réception (12) pour les broches d'accouplement (11).

7. Dispositif selon les revendications 1 et 6, caractérisé par le fait que les ouvertures de réception (12) prévues pour les broches d'accouplement (11) sont constituées pour une douille (23) qui, solidaire du boîtier, présente des trous traversants (27) pour des billes (26) qui forment des organes de verrouillage et viennent en prise dans une rainure annulaire (28) de la broche d'accouplement (11), et que la pièce de verrou (22) comprend une boîte (25) qui, montée sur la douille (23) sur laquelle elle peut être déplacée dans le sens axial, est maintenue par le ressort de fermeture (24) dans une position de fermeture occultant les trous traversants (27) pour les billes (26) et peut être déplacée et éloignée des trous traversants (27) en surmontant la force du ressort de fermeture (24).

8. Dispositif selon la revendication 7, caractérisé par le fait qu'un piston (29) est logé dans la douille (23) solidaire du boîtier et peut être enfoncé en partant d'une position en butée et de recouvrement des trous traversants (27) pour les billes (26), dans l'ouverture de réception (12) par la broche d'accouplement (11) surmontant la force d'un ressort (30).

7

FIG.1

0 175 673

FIG.2

# FIG.3

FIG.4

FIG.5

# FIG.6

# FIG.7

# FIG.8